(19) **Europäisches Patentamt European Patent Office Office européen des brevets**

(11) **EP 2 255 159 B1**

(12) **FASCICULE DE BREVET EUROPEEN**

(45) Date de publication et mention de la délivrance du brevet:
**29.06.2016 Bulletin 2016/26**

(51) Int Cl.:
***G01D 5/353*** *(2006.01)*     ***G01D 5/26*** *(2006.01)*
***H01S 3/067*** *(2006.01)*     ***G01L 11/02*** *(2006.01)*

(21) Numéro de dépôt: **09721635.2**

(22) Date de dépôt: **16.03.2009**

(86) Numéro de dépôt international:
**PCT/EP2009/053100**

(87) Numéro de publication internationale:
**WO 2009/115501 (24.09.2009 Gazette 2009/39)**

(54) **CAPTEUR A FIBRE OPTIQUE AUTO-REFERENCE ET RESEAU DE CAPTEURS ASSOCIE**

SELBSTREFERENZIERTER GLASFASERSENSOR UND ENTSPRECHENDES SENSORNETZ

SELF-REFERENCED OPTICAL FIBRE SENSOR AND RELATED SENSOR NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **18.03.2008 FR 0801482**

(43) Date de publication de la demande:
**01.12.2010 Bulletin 2010/48**

(73) Titulaire: **THALES**
**92400 Courbevoie (FR)**

(72) Inventeurs:
- **MOLIN, Stéphanie**
  **F-91210 Draveil (FR)**
- **DOLFI, Daniel**
  **F-91400 Orsay (FR)**
- **HUIGNARD, Jean-Pierre**
  **F-75013 Paris (FR)**
- **DOISY, Martine**
  **F-06130 Plascassier (FR)**
- **MORVAN, Loïc**
  **F-91400 Orsay (FR)**
- **POCHOLLE, Jean-Paul**
  **F-91290 La Norville (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**WO-A-02/48654**     **GB-A- 2 299 203**
**US-A1- 2006 126 435**     **US-B2- 6 885 784**
**US-B2- 7 251 023**

EP 2 255 159 B1

**Description**

Le domaine de l'invention est celui des capteurs à fibre optique permettant la mesure de grandeurs physiques. Les capteurs à base de fibres optiques sont étudiés depuis près de trente ans. On se reportera sur ce sujet, par exemple, à la publication de C. Menadier, C.Kissenger, et H. Adkins, "The photonic sensor", Instrum. Control Syst. Vol.40, 114 (1967). Ils bénéficient des avantages des fibres optiques, qui, outre leur faible poids, encombrement, coût et insensibilité aux perturbations électromagnétiques, présentent de faibles pertes, une bande passante élevée et sont propices aux techniques de multiplexage et à la mise en oeuvre d'amplificateurs ou de capteurs distribués.

Les applications des capteurs à fibre optique sont diverses. On citera la publication de B. Culshaw, "Optical fiber sensor technologies : opportunities and -perhaps-pitfalls", J. Ligth. Tech. Vol. 22, No. 1, 39 (2004). Les plus fréquentes concernent la détection de contrainte, de température et de pression mais elles existent aussi en détection de courant/tension, de déplacement, de torsion, d'accélération, de gaz,.... Les techniques utilisées sont très variées, les plus activement étudiées concernent :

- les gyroscopes à fibre. (Voir, à ce sujet, V. Vali et R. W. Shorthill, "Fiber ring interferometer", Appl. Opt. Vol.15, No. 5, 1099 (1976)).

- d'autres méthodes interférométriques (voir P. Nash, "Review of interferometric optical fiber hydrophone technology", IEE Proc. Radar Sonar Navig. Vol. 143, No. 3 (1996)).

- les techniques de rétro-diffusion comme les diffusions Raman, Brillouin ou Rayleigh. On se reportera, en particulier, à L. Thévenaz et al., "Monitoring of large structures using distributed Brillouin fiber sensing", proceedings of the 13th international conf on optical fiber sensors (OFS-13), Korea, SPIE Vol. 3746, 345 (1999).

Près de la moitié des capteurs fibrés actuellement à l'étude mettent en oeuvre des réseaux de Bragg (S.W. James et al. « Simultaneous independent temperature and strain measurement using in-fiber Bragg grating sensors », Elect. Lett. 32 (12) 1133 (1996)). En particulier, l'utilisation de capteurs actifs à lasers à base de réseaux de Bragg se répand. Il s'agit soit de lasers « DBR » pour Distributed Bragg Reflector (voir D. Kersey et al., « Fiber Grating Sensors », J. Light. Techn. Vol. 15, No. 8 (1997), soit de lasers DFB pour Distributed FeedBack (voir J. Hill et al., "DFB fibre-laser sensor developments", OFS-17 Proc. SPIE Vol. 5855 p.904 et le brevet US 8,844,927 intitulé "Optical Fiber Distributed FeedBack Laser" (1998)). La pureté spectrale de ces lasers permet un gain important en sensibilité par rapport à des dispositifs à réseaux de Bragg passifs.

Dans le cas des hydrophones à fibre à réseau de Bragg, la grandeur à mesurer est une contrainte appliquée au capteur. La sensibilité requise est telle que, quelque soit le type de réseau fibré utilisé (DBR, DFB ou Bragg passif), le système d'interrogation est complexe. En effet, la contrainte sur le capteur induit un déphasage sur l'onde optique qui s'y propage. La mesure de ce déphasage nécessite la comparaison de la phase du signal d'intérêt avec une référence. Parmi les méthodes utilisées, on distingue principalement deux solutions techniques pour obtenir une onde de référence. La première solution consiste à utiliser une onde de référence provenant d'un second capteur, similaire, mais isolé de la perturbation. Cette méthode est décrite dans C. Sun et al., "Serially multiplexed dual-point fiber-optic acoustic emission sensor", J. Light. Techn. Vol. 22, No. 2 (2004). La deuxième solution consiste à séparer le signal d'intérêt en deux bras de chemins optiques très différents et à réaliser des interférences entre ces deux bras ; dans ce cas, l'onde de référence est une copie retardée de l'onde signal. On se reportera à la publication de. S. Abad et al., "Interrogation of wavelength multiplexed fiber Bragg gratings using spectral filtering and amplitude-to-phase optical conversion", J. of Ligth. Techn. Vol. 21, No. 1 (2003) pour toutes informations sur cette seconde méthode.

L'utilisation de capteurs actifs émettant deux ondes optiques de fréquence différentes est une solution envisageable pour s'affranchir de bancs interférométriques ou de capteur additionnel. Les DFB-FL (Distributed FeedBack Fiber Laser) oscillant sur deux états de polarisation ou deux modes de propagation transverses ou longitudinaux ont d'ores et déjà fait l'objet de brevets et de publications. On citera les brevets US 5,844,927 Optoplan (Norvège) 1998 « Optical fiber DFB Laser », US 6,885,784 Vetco Gray Controls Limilted (UK) 2005 « Anisotropic DFB fiber laser sensor » et US 6,630,658 ABB Research Ltd (CH) 2003 « Fiber laser pressure sensor » et la publication de Kumar et al., « Studies on a few-mode fiber-optic strain sensor based on LP01-LP02 mode interference », J. Ligth. Techn. Vol. 19, No. 3 (2001).

Partant de ces principes, des architectures d'hydrophones à laser à fibre DFB ont été proposées. On en trouvera le détail dans les publications de P.E. Bagnoli et al., « Development of an erbium-doped fibre laser as a deep-sea hydrophone », J. of Optics A : Pure Appl. Opt. 8 (2006), de D.J. Hill et al., "A fiber laser hydrophone array", SPIE Conf on Fiber Optic Sensor Technology and Applications Vol. 3860, 55 (1999) ou de S. Foster et al., « Ultra thin fiber laser hydrophone research trough government-industry collaboration » OFS 2005-2006. Le document WO 0248654 décrit un capteur à fibre optique selon l'état de la technique.

Cependant, les architectures proposées restent encore complexes. L'objet de l'invention est de mettre en oeuvre des capteurs actifs fibrés dits « auto-référencés » à réseaux de Bragg, basés sur des lasers à fibre à réseaux de Bragg. On entend par capteur « auto-référencé » tout capteur générant deux signaux de mesure portant l'information à mesurer, dans le cas présent, les signaux sont deux ondes optiques émises à des fréquences optiques différentes. La mesure différentielle des variations entre les fréquences des deux signaux est représentative de l'information à mesurer. Ainsi, la grandeur à mesurer est directement obtenue par battement entre ces deux ondes optiques et ne nécessite plus ni interféromètre ni capteur de référence. On simplifie ainsi considérablement les architectures de capteurs à fibres optiques, en supprimant les modules interférométriques équipant classiquement leurs bancs d'interrogation. Les dispositifs selon l'invention s'appliquent préférentiellement à la réalisation d'hydrophones à fibres optiques mais peuvent être utilisés avec profit pour mesurer diverses grandeurs physiques. On peut les utiliser en particulier comme capteurs de contrainte : l'information sur la grandeur à mesurer, par exemple la contrainte appliquée sur le capteur est obtenue via la fréquence de battement des deux ondes issues du capteur.

Plus précisément, l'invention a. pour objet un capteur à fibre optique comprenant au moins :

- une fibre optique de mesure comportant un milieu amplificateur dopé dont les caractéristiques optiques sont sensibles à une grandeur physique, la fibre comportant au moins un réseau de Bragg, la fibre est agencée de façon à générer dans le milieu amplificateur deux ondes optiques de fréquence optique différente, se propageant dans le même sens après réflexion sur le réseau de Bragg et émises par le milieu amplificateur, les deux fréquences optiques dépendant de la grandeur physique ;
- des moyens de pompage optique du dit milieu amplificateur assurant l'inversion de population dudit milieu et la génération des deux ondes optiques ;
- le capteur comportant des moyens d'analyse de la différence de fréquence entre les deux ondes optiques.

Il existe deux modes privilégiés de réalisation de l'invention. Dans un premier mode de réalisation, la fibre optique est une fibre à maintien de polarisation biréfringente, comportant deux axes propres d'indice de réfraction respectifs $n_e$ et $n_o$, le capteur comporte des moyens d'émission d'une onde optique dite sonde, ladite onde créant par interférence avec elle-même après réflexion sur le réseau de Bragg un réseau de gain dynamique donnant naissance aux deux ondes optiques de fréquence optique différente.

Dans un second mode de réalisation, la fibre comporte un second réseau de Bragg, le premier et le second réseau étant séparés par un tronçon de fibre amplificatrice, l'ensemble constitué par le premier réseau de Bragg, le tronçon de fibre amplificatrice et le second réseau de Bragg formant une cavité laser de type DBR (Distributed Bragg Reflector) agencé de façon qu'au moins deux modes de fréquence optiques différentes oscillent dans la cavité laser.

La fibre est dopée par des ions de terres rares.

Plus particulièrement, le capteur est un capteur de contraintes la grandeur physique à mesurer étant une contrainte mécanique appliquée sur la fibre. Dans ce cadre, le capteur peut être un hydrophone.

De plus, le.capteur peut comporter une structure sensiblement cylindrique sur laquelle est enroulée la fibre optique de mesure, ledit cylindre étant réalisé dans un matériau ayant un module d'Young le plus faible possible de façon à amplifier la contrainte exercée sur la fibre, le matériau du cylindre étant, par exemple, le polymethylsiloxane.

L'invention concerne également un réseau de capteurs à fibre optique tels que définis précédemment, tous les capteurs étant disposés en série sur une même fibre optique et le réseau comportant un multiplexeur en longueurs d'onde disposé entre ladite fibre et les moyens d'analyse.

L'invention sera mieux comprise et d'autres avantages apparaîtront à la lecture de la description qui va suivre donnée à titre non limitatif et grâce aux figures annexées parmi lesquelles :

La figure 1 représente le synoptique général d'un capteur à fibre optique selon l'invention ;
La figure 2 représente un premier mode de réalisation mettant en oeuvre des fibres à maintien de polarisation ;
Les figures 3 et 4 représentent un second mode de réalisation mettant en oeuvre un laser de type DBR ;
La figure 5 représente un mode particulier de réalisation du capteur ;

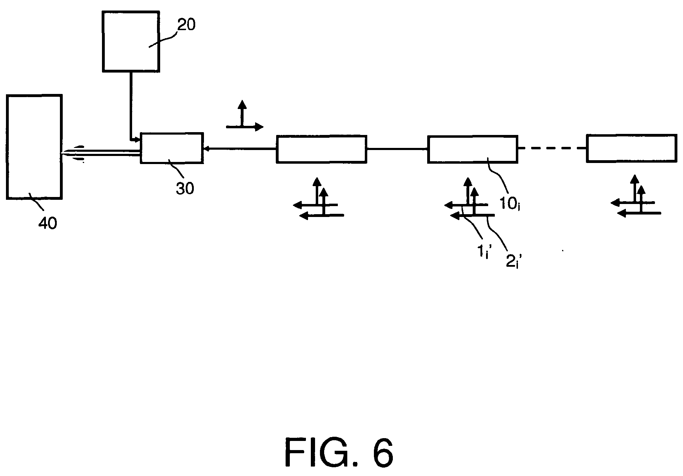

Enfin, la figure 6 représente un réseau de capteurs à fibres optiques selon l'invention.

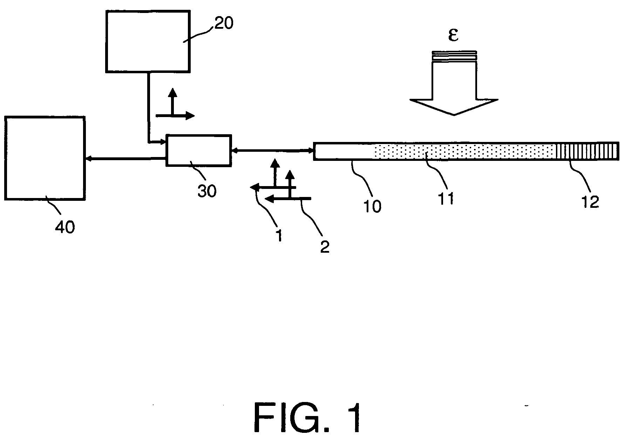

Comme illustré en figure 1, un capteur à fibre optique selon l'invention comprend au moins :

- une fibre optique 10 de mesure comportant un milieu amplificateur dopé 11 dont les caractéristiques optiques sont sensibles à une grandeur physique $\varepsilon$, la fibre comportant au moins un réseau de Bragg 12, la fibre est agencée de façon à générer deux ondes optiques 1 et 2 de fréquence optique différente notées $\nu_1(\varepsilon)$ et $\nu_2(\varepsilon)$ se propageant dans le même sens après réflexion sur le réseau de Bragg 12 et émises par le milieu amplificateur 11, les deux fréquences optiques dépendant de la grandeur physique ;
- des moyens de pompage optique 20 du dit milieu amplificateur assurant l'inversion de population dudit milieu. Il peut s'agir d'une diode laser émettant à une fréquence adaptée au milieu à gain composant le capteur. Cette longueur d'onde peut être, par exemple, 980 nm ou 1480 nm si la fibre est dopée à l'erbium. Dans ce cas, les fréquences d'émission sont voisines de 1550 nm ;

- le capteur comporte des moyens de séparation des ondes incidente et réfléchies 30 et des moyens d'analyse 40 de la différence de fréquence entre les deux ondes optiques, les deux ondes étant reçues par un photo-détecteur non représenté sur la figure 1.

Les deux fréquences optiques $\nu_1(\varepsilon)$ et $\nu_2(\varepsilon)$ émises donnent lieu à un battement sur le détecteur à la fréquence $\Delta\nu(\varepsilon) = \nu_1(\varepsilon) - \nu_2(\varepsilon)$, qui peut encore s'écrire $\Delta\nu(\varepsilon) = \nu_1-\nu_2+\delta\nu(\varepsilon)$. Les deux fréquences optiques $\nu_1(\varepsilon)$ et $\nu_2(\varepsilon)$ et la valeur $\Delta\nu(\varepsilon)$ sont fonctions de la déformation longitudinale $\varepsilon$ vue par la fibre optique du capteur. Par conséquent, cette déformation induit une modulation de la phase du signal d'interférence. En effet, si $E_1$ et $E_2$ sont les champs optiques des ondes aux fréquences $\nu_1$ et $\nu_2$, le photo-courant en sortie de détecteur s'écrit :

$$i_{ph}(t) \succ |E_1|^2 + |E_2|^2 + 2|E_1||E_2|\cos[2\pi \times \Delta\nu \times t]$$

Soit

$$i_{ph}(t) \succ |E_1|^2 + |E_2|^2 + 2|E_1||E_2|\cos[2\pi\nu_1 t - 2\pi\nu_2 t + 2\pi\delta\nu t]$$

Le signal à traiter apparaît directement comme une modulation de fréquence autour d'une porteuse à la fréquence $\nu_1-\nu_2$. Les deux fréquences sont typiquement espacées de $\nu_1-\nu_2$ de l'ordre de quelques GHz à quelques dizaines de GHz, ce qui correspond, dans le proche infra-rouge à un écart en longueur d'onde de l'ordre de 0,16 nm. La modulation de phase $\delta\nu(\varepsilon)$ est obtenue par détection hétérodyne utilisant un oscillateur local de fréquence voisine de $\nu_1-\nu_2$, permettant de translater le signal vers les fréquences basses, plus propices au traitement numérique. L'oscillateur local doit être de pureté spectrale suffisante pour ne pas limiter la mesure du signal $\delta\nu(\varepsilon)$ dont l'amplitude peut être de l'ordre du mHz. Les synthétiseurs actuellement commercialisés ont une stabilité de l'ordre de $2.10^{-10}$/jour qui est amplement suffisante pour ce type de capteur.

Une application industrielle importante de ce type de capteurs est la mesure de contrainte, et tout particulièrement la mesure de contraintes dans le cas particulier où le capteur est un hydrophone. Dans ce cas, il est intéressant de déterminer la sensibilité des capteurs selon l'invention et de la comparer à la grandeur d'intérêt pour les applications hydrophones qui est le « bruit de mer zéro » (DSS0). Ainsi, le plus petit signal détectable par le capteur doit correspondre à une densité spectrale de bruit en pression de l'ordre de P = 150 $\mu$Pa/$\sqrt{Hz}$ à 1 kHz.

La déformation longitudinale correspondant à une pression appliquée de 150$\mu$Pa/$\sqrt{Hz}$ sur une fibre optique est obtenue par la relation :

$$\varepsilon_z = (2\vartheta - 1)P/E$$

où $E$ est le module d'Young et $\vartheta$ le coefficient de Poisson.

Pour la silice, $E = 72.10^9$ Pa et $\vartheta=0,23$, ce qui correspond à une valeur de déformation longitudinale égale à

$$\varepsilon_z = -0,75.10^{-15}/\sqrt{Hz} \;.$$

Les dispositifs existants permettent le transfert optimal de l'onde acoustique en élongation de la cavité, induisant un gain en élongation de l'ordre de 40 dB, ce qui équivaut à une pression minimale à détecter de l'ordre de 1 Pa, donc à une déformée longitudinale égale à :

$$\varepsilon_z = -0,75.10^{-11}/\sqrt{Hz} \;.$$

Tous les dispositifs selon l'invention sont basés sur des réseaux de Bragg dans des fibres optiques. Le décalage $\delta\lambda_B$ de la longueur d'onde de Bragg des capteurs de ce type est typiquement :

$$\delta\lambda_B = 2n_e\Lambda\varepsilon_z - 2n_e\Lambda\left[\frac{n_e^2}{2}\left((p_{11}+p_{12})\varepsilon_r + p_{12}\varepsilon_z\right)\right] \qquad\text{(E1)}$$

avec :

- $\varepsilon_z$ et $\varepsilon_r$, les déformations longitudinales et radiales de la fibre ($\varepsilon_r = \varepsilon_z$ dans l'hypothèse isotrope)
- $n_e$ l'indice de réfraction effectif de la fibre
- $\Lambda = \lambda_B/2n_e$ le pas du réseau
- $p_{11}$ et $p_{12}$ les coefficients élasto-optiques longitudinal et transverse de la fibre

Pour la silice, $n_e$ =1,456 , $p_{11}$ = 0,121 et $p_{12}$ = 0,265.

De cette relation, on déduit le décalage en fréquence d'un laser à fibre à réseaux de Bragg dû à une déformation longitudinale statique. Celui-ci est approximativement égal à : $\delta v_1 \approx 0.78\varepsilon_z v_1$. Cette relation est bien vérifiée expérimentalement.

Si l'on admet que cette relation reste valable en dynamique, le décalage en fréquence optique $\delta v_1$ émise par un laser à réseaux de Bragg émettant une onde de fréquence optique $v_1$, soumis à une pression équivalant au bruit de mer zéro, est, à $\lambda \sim 1,55\ \mu$m correspondant à une fréquence $v_1 \approx 192.10^{12}\ Hz$:

$$\delta v_1 \approx 0{,}78 \times 0{,}75.10^{-15} \times 192.10^{12} \approx 112 mHz/\sqrt{Hz}$$

Ce qui correspond, en considérant une amplification mécanique de l'ordre de 40dB, c'est-à-dire à une déformation dynamique longitudinale à mesurer de l'ordre de $10^{-11}/\sqrt{Hz}$, à $\delta v_1 \approx 1 kHz/\sqrt{Hz}$.

Le système d'interrogation du capteur doit être capable de mesurer de très faibles décalages de fréquence du laser, de l'ordre de $1 kHz/\sqrt{Hz}$ dans le cas explicité ci-dessus, soit la nécessité d'un laser monofréquence à très faible bruit dans la bande de fréquence acoustique du capteur.

Il existe différents procédés permettant de générer les deux fréquences optiques $v_1(\varepsilon)$ et $v_2(\varepsilon)$. Un premier mode de réalisation est dérivé de celui décrit dans la demande de brevet français intitulée « Capteur de grandeurs physiques à fibre optique insensible aux grandeurs statiques », de numéro de dépôt FR 07 01454.

Le principe de base du processus physique de mélange à deux ondes dans un milieu amplificateur tel que décrit dans cette précédente demande est le suivant : Le capteur comporte une fibre optique dopée et préalablement pompée optiquement pour atteindre l'inversion de population entre ses niveaux d'énergie. La fibre comporte un miroir de Bragg. Si on injecte une onde dite sonde à une fréquence optique $v_1 = \dfrac{c}{\lambda_1}$ (où $c$ et $\lambda_1$ représentent respectivement la vitesse de la lumière et la longueur d'onde dans le vide) et de longueur de cohérence $L_{coh}$ au moins égale à la longueur $L$ de la fibre, cette onde se réfléchit sur le miroir de Bragg et donne naissance à une onde réfléchie de même état de polarisation et de même longueur d'onde. Ces deux ondes, notées onde 1 et onde 1$_{\text{réfléchie}}$ se propagent dans le milieu amplificateur en sens opposés et y interfèrent. Il en résulte une variation spatiale périodique de l'intensité totale de l'onde à la fréquence $v_1$ dans le milieu, qui conduit, au niveau des franges brillantes, à une saturation périodique du gain dans le milieu amplificateur. Le réseau de gain ainsi généré permet la diffraction et le couplage des deux ondes qui l'ont créé. Ainsi, l'onde 1 se diffracte sur le réseau de gain qu'elle a inscrit par interférence avec l'onde 1$_{\text{réfléchie}}$ pour donner une onde diffractée, onde 1$_{\text{diffractée}}$, se propageant dans le même sens que l'onde 1$_{\text{réfléchie}}$. Le pas du réseau de gain vaut

$$\bar{\Lambda} = \frac{\lambda_1}{2n} = \frac{c}{2nv_1}$$ où $n$ représente l'indice de réfraction du milieu amplificateur vu par les ondes 1 et 1$_{\text{réfléchie}}$. Ainsi, cette onde diffractée a une longueur d'onde qui dépend de l'indice optique, donc de la contrainte appliquée.

Le premier mode de réalisation utilise le principe de génération d'onde diffractée décrit ci-dessus. Cependant, la fibre optique employée est un tronçon de fibre amplificatrice fortement biréfringente, dans lequel est provoqué du mélange à deux ondes par saturation du gain. L'utilisation de ce type de fibre est décrite notamment dans les publications suivantes : A. Brignon, G. Feugnet, J.-P. Huignard, and J.-P. Pocholle, « Efficient degenerate four-wave mixing in a diode-pumped microchip Nd:YVO4 amplifier», Opt. Lett. Vol. 20, No. 6, 548-550 (1995) - P. Yeh, « Two-wave mixing in nonlinear media », IEEE. J. Quantum Electr. Vol. 25, No. 3, 484-518 (1989) - S.T. Fisken, «Transient Bragg Reflection gratings in erbium-doped fiber amplifiers »,Opt. Lett. Vol. 17, No. 24, 1776-1778 (1992) - B. Fischer, J.L. Zyskind, J.W. Sulhoff and D.J. DiGiovanni, « Nonlinear wave mixing and induced gratings in erbium-doped fiber amplifiers » , Opt. Lett. Vol. 18, No. 24, 2108-2110 (1993).

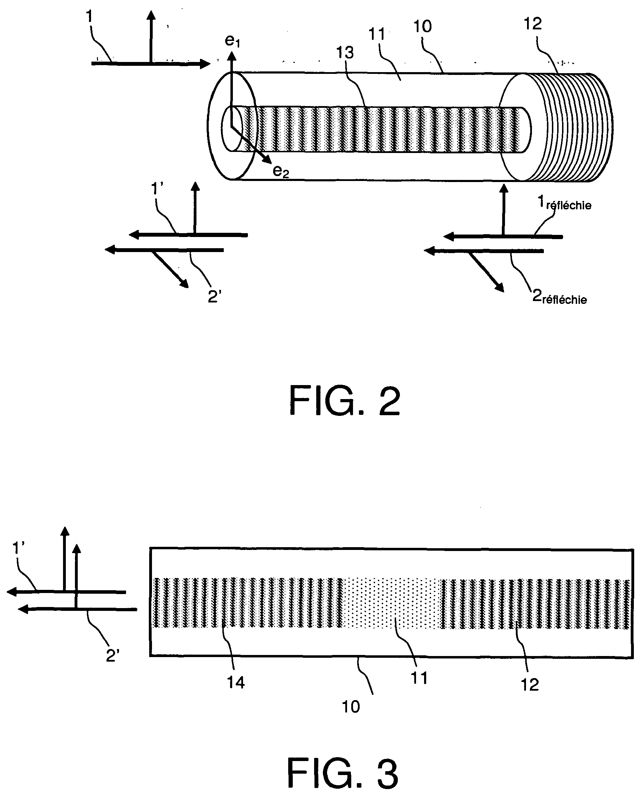

Une vue de la fibre 10 selon ce premier mode de réalisation est représentée en figure 2. On notera $\vec{e}_1$ et $\vec{e}_2$ les deux axes propres de la fibre amplificatrice à maintien de polarisation, d'indices de réfraction respectifs $n_e$ et $n_o$. On suppose, par exemple, que l'onde pompe 1 se propage à la fréquence $\nu_1$ et est polarisée selon l'axe $\vec{e}_1$. Son couplage dans le milieu amplificateur avec l'onde réfléchie $1_{\text{réfléchie}}$ par le miroir de Bragg génère un réseau de gain 13 cohérent sur toute la longueur de la fibre. Ce dispositif peut être considéré comme une cavité laser de type « DFB » (Distributed FeedBack) injectée à la fréquence $\nu_1$. Certains des photons d'émission spontanée amplifiée polarisés selon l'axe $\vec{e}_2$ peuvent être à l'origine d'une onde oscillant dans cette cavité. Celle-ci doit vérifier les conditions d'accord de phase du DFB. L'indice de réfraction vu par cette onde est ne différent de $n_o$. Par conséquent, sa longueur d'onde d'accord $\lambda_2$ au réseau DFB diffère de $\lambda_1$ et sa fréquence optique $\nu_2 = \dfrac{c}{\lambda_2}$ diffère de $\nu_1 = \dfrac{c}{\lambda_1}$, $c$ et $\lambda_i$ sont pris dans le vide. La relation d'accord de phase s'écrit : $\Lambda = \dfrac{\lambda_1}{2n_e}\lambda$ pour les ondes 1 et $1_{\text{réfléchie}}$, et $\Lambda = \dfrac{\lambda_2}{2n_o}$ pour les ondes 2 et $2_{\text{réfléchie}}$ ($2_{\text{réfléchie}}$ correspondant à la réflexion de l'onde 2 sur le miroir DFB fixe).

On en déduit la valeur de la fréquence optique de l'onde 2 en fonction de la fréquence de l'onde 1 :

$$\nu_2 = \frac{n_e(\nu_1)}{n_o(\nu_2)}\nu_1.$$

Les deux ondes diffractées 1' et 2' par le réseau de gain 13, aux fréquences optiques $\nu_1(\varepsilon)$ correspondant à l'onde injectée et $\nu_2(\varepsilon)$, onde naissant selon l'axe de polarisation perpendiculaire donnent lieu à un battement sur le détecteur à la fréquence $\Delta\nu(\varepsilon) = \nu_1(\varepsilon) - \nu_2(\varepsilon) = \nu_1 + \delta\nu_1(\varepsilon) - \nu_2 - \delta\nu_2(\varepsilon)$. La valeur du décalage en fréquence $\delta\nu_1(\varepsilon) - \delta\nu_2(\varepsilon)$ autour de $\nu_1 - \nu_2$ est fonction de la contrainte $\varepsilon$ vue par le capteur.

A titre d'exemple, une fibre du commerce, dont la biréfringence $\Delta n = n_e - n_o$ se situe dans la gamme $\Delta n \approx 10^{-3}$ - $10^{-4}$, provoque une séparation $\Delta\lambda = \lambda_1 - \lambda_2$ entre les deux longueurs d'ondes générées de l'ordre de $\Delta\lambda \approx 0,1 - 1nm$ ; soit un écart de fréquence $\Delta\nu = \nu_1 - \nu_2$ se situant dans la fenêtre $\Delta\nu = \dfrac{\Delta n}{n_o}\nu_1 \approx 10 - 100GHz$. La modulation de fréquence du signal de battement se situe donc autour d'une porteuse RF dans la bande 10 -100 GHz.

Pour calculer l'ordre de grandeur de la variation de fréquence optique $\delta\nu_i(\varepsilon)$ subie par chacune des deux ondes issues de ce dispositif, on utilise la relation (E1). Dans le cas d'une fibre isotrope, on a:

$$\frac{\delta\lambda_{1,2}}{\lambda_{1,2}} \times \frac{1}{\varepsilon} = 1 - \frac{n_{e,o}^2}{2}p_{11} - n_{e,o}^2 p_{12}$$

Ce qui donne, pour une fibre biréfringente, en considérant que $n_e$=1,456 et $n_o$=1,457 et $\varepsilon = -0,75.10^{-11}/\sqrt{Hz}$ :

$$\delta\nu_1(\varepsilon) = 2,318.10^{-12} \times \nu_1$$

et

$$\delta\nu_2(\varepsilon) = 2,325.10^{-12} \times \frac{n_e}{n_o}\nu_1 = 2,323.10^{-12} \times \nu_1$$

Le décalage en fréquence $\delta\nu_1(\varepsilon) - \delta\nu_2(\varepsilon)$ autour de $\nu_1 - \nu_2$ (avec $\nu_1$=192.10$^{12}$ Hz) est donc de l'ordre de

$$\delta v_1(\varepsilon) - \delta v_2(\varepsilon) \approx 1 Hz / \sqrt{Hz} \ .$$

Ce décalage peut être amplifié, par exemple, en appliquant une contrainte longitudinale d'amplitude différente sur chacun des axes de la fibre biréfringente $\left( \varepsilon_z^o \neq \varepsilon_z^e \right)$.

Ce capteur combine donc un réseau de gain dynamique par mélange d'ondes par saturation du gain dans une fibre amplificatrice avec l'inscription d'un miroir de Bragg fixe par des techniques UV standards. La fibre amplificatrice est biréfringente. Ce capteur est donc un laser bi-fréquence : deux modes de polarisation orthogonaux de fréquence optique $v_1$ et $v_2$ sont autorisés à osciller dans la cavité. Ces deux modes sont couplés puisqu'ils se partagent la même population d'ions excités : ils possèdent une relation de phase constante. La section de fibre sur laquelle est inscrit le réseau fixe qui peut être de l'ordre de quelques centimètres de long peut-être soit l'extrémité de d'une fibre dopée à maintien de polarisation, soit un tronçon de fibre standard à maintien de polarisation dont les valeurs des indices ordinaire et extraordinaire coïncident avec ceux de la fibre dopée. Le réseau dynamique prend naissance dans la fibre dopée avec les conditions d'accord de phase imposées par la présence du miroir de Bragg fixe. Le dispositif fonctionne comme un laser DFB.

Ce dispositif peut-être réalisé sur une grande longueur de fibre, la longueur du capteur n'est pas limitée par les techniques d'inscription UV utilisées pour les réseaux de Bragg standards et présenter une grande sélectivité spectrale. La longueur du capteur est un paramètre à adapter à l'application visée. En effet, dans le cas de capteurs distribués pour antenne d'hydrophones, la longueur d'onde des signaux acoustiques sous-marins (~1,5m à 1kHz) impose une limite supérieure à la taille du capteur.

Ce dispositif présente l'avantage d'être insensible à la pression statique. La durée de vie du réseau de gain créé détermine la fréquence de coupure basse du capteur. Dans le cas classique où le dopant en terre rare de la fibre amplificatrice est l'ion erbium, la durée de vie de l'état excité est de l'ordre de 1 à 10 ms selon l'état de saturation du milieu. Le capteur présenté ici possède donc une fréquence de coupure basse de l'ordre de 100 Hz à 1 kHz. Pour les perturbations lentes correspondant aux variations de phase de l'onde incidente, aux variations locales de température ou de pression statique, le réseau s'adapte automatiquement. Pour les perturbations de fréquences plus élevées concernant l'onde acoustique à détecter, le capteur se comporte comme un réseau de Bragg fixe classique dont l'élongation ou la compression module la réflectivité.

Le second mode de réalisation d'un capteur selon l'invention est basé sur l'utilisation de lasers de type DBR, acronyme signifiant « Distribued Bragg Reflector ». Une vue de la fibre mettant en oeuvre ce second principe est représentée en figure 3. On utilise généralement pour réaliser des capteurs des lasers de type DFB. Leur utilisation pour ce type d'application (hydrophone en particulier) est actuellement en plein essor. Les lasers DFB consistent en un réseau de Bragg continu gravé dans une fibre optique amplificatrice typiquement dopée erbium ou erbium-ytterbium. Ils sont préférés aux lasers à fibre DBR, constitués de deux réseaux de Bragg 12 et 14, séparés par un petit tronçon 11 de quelques 100 $\mu$m de fibre amplificatrice. En effet, en géométrie DBR, la distance entre les deux réseaux de Bragg permet l'oscillation de plusieurs modes de cavité, situés dans la bande de réflexion des réseaux. Cet aspect multimodal est apparu néfaste à la plupart des applications d'hydrophone. Cependant, cet aspect multimodal présente des avantages certains dans le cadre des capteurs selon l'invention.

En effet, si la fibre comporte un laser de type DBR dans lequel peuvent osciller deux modes longitudinaux 1' et 2', de fréquences optiques $v_1$ et $v_2$, toute déformation longitudinale de la cavité laser de longueur initiale $L_{initiale}$ vers une longueur $L_{finale}$ modifie son intervalle spectral libre ISL=c/2n$L_{initiale}$ (c : vitesse de la lumière, n : indice de réfraction de la fibre) d'une quantité $\Delta$ISL=c/2n$L_{initiale}$-c/2n$L_{finale}$.

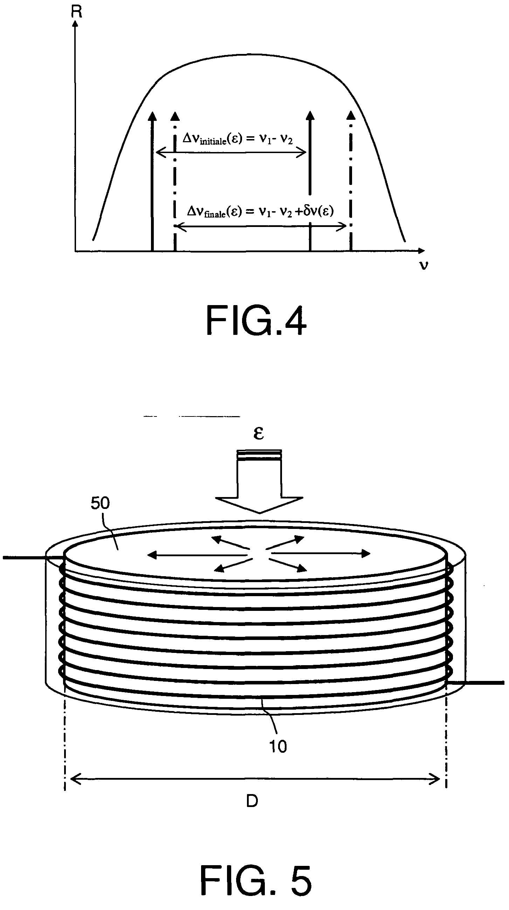

La différence entre les deux fréquences optiques $v_1$ et $v_2$ ($\Delta v_{initiale}(\varepsilon) = v_1 - v_2$) devient $\Delta v_{finale}(\varepsilon) = v_1 - v_2 + \delta v(\varepsilon)$ avec $\delta v(\varepsilon) = \Delta v_{initiale}.\Delta L/L$ soit encore $\delta v(\varepsilon) = \Delta v_{initiale} .\varepsilon$ comme illustré en figure 4. Sur cette figure, les flèches continues représentent les deux fréquences émises sans application de contraintes sur la fibre, les flèches pointillées représentent les deux fréquences émises sous application de contraintes, la courbe représente la bande de réflexion des réseaux de Bragg en fonction de la longueur d'onde.

A titre d'exemple, si la longueur effective de cavité est de l'ordre du centimètre, correspondant à $\Delta v_{initiale}$ ~ 10GHz. Dans le cas d'un hydrophone $\left( \varepsilon_z = -0,75.10^{-11} / \sqrt{Hz} \right)$, il est donc raisonnable de s'attendre à une variation de l'ordre de $\delta v(\varepsilon) = 10 \times 10^{-9} \times 10^{-11} \approx 100 mHz / \sqrt{Hz} \ .$ Cette variation est parfaitement détectable.

Comme on l'a vu, et en particulier, pour les applications du capteur comme hydrophone, les effets à mesurer peuvent être très faibles. Il est donc intéressant d'amplifier la contrainte subie par la fibre de façon à obtenir des variations de fréquence plus importantes. Le packaging des capteurs à fibre optique est un sujet d'intérêt qui a fait l'objet de différentes solutions décrites dans les brevets US 6,442,304 Chevron U.S.A. Inc. (San Ramon, CA), Sensor Dynamics Limited (Winchester, B), University of Southampton (Southampton, GB) 2002 « Apparatus and method for protecting devices, especially fibre optic devices, in hostile environments» et US 6, 668,105 Systems Planning & Analysis, Inc.

(Greenbelt, MD), 2003 « Fiber optic strain sensor».

Pour amplifier la contrainte subie par la fibre, le capteur peut comporter une structure sensiblement cylindrique 50 sur laquelle est enroulée la fibre optique 10 de mesure comme illustré en figure 5, ledit cylindre étant réalisé dans un matériau ayant un module d'Young le plus faible possible de façon à amplifier la contrainte ε exercée sur la fibre. La fibre optique enroulée autour d'un cylindre subit alors une élongation proportionnelle à l'augmentation du diamètre D du cylindre qui est représentée par un cylindre en traits fins sur la figure 5. Un tel montage permet par conséquent, très simplement, d'amplifier l'effet de la grandeur à mesurer, dirigée suivant l'axe du cylindre, sur l'élongation de la fibre.

On peut facilement calculer l'effet amplificateur. Soit :

- L : longueur de la fibre optique
- N : nombre de tours de fibre autour du cylindre
- R : rayon du cylindre
- P : pression appliquée
- $\vartheta_{silice};E_{silice}$ : coefficient de poisson et module d'Young de la silice utilisé pour réaliser la fibre,
- $\vartheta_{mat};E_{mat}$ coefficient de poisson et module d'Young du matériau utilisé pour réaliser le cylindre.

Si la pression est appliquée directement à la fibre optique, l'allongement relatif de celle-ci vaut :

$$\varepsilon_{z,simple} = \frac{\Delta L}{L} = \frac{P \times (2\vartheta_{silice} - 1)}{E_{silice}}.$$

Si la pression est appliquée suivant l'axe d'un support cylindrique autour duquel est enroulée la fibre optique, l'allongement relatif de celle-ci vaut :

$$\varepsilon_{z,amplifié} = \frac{\Delta L}{L} = \frac{\Delta R}{R} = \frac{P \times (2\vartheta_{mat} - 1)}{E_{mat}}.$$

Le gain en élongation vaut donc :

$$\frac{\varepsilon_{z,amplifié}}{\varepsilon_{z,simple}} = \frac{(2\vartheta_{mat} - 1) \times E_{silice}}{(2\vartheta_{silice} - 1) \times E_{mat}}.$$

A titre d'exemple, le gain en élongation dans le cas où le matériau utilisé pour réaliser le cylindre est un élastomère comme, par exemple, du polymethylsiloxane (PDMS) (voir, à ce propos, D. Armani, C. Liu and N. Aluru "Reconfigurable fluid circuits by PDMS elastomer micromachining", This paper appears in twelfth IEEE international conférence on Micro Electro Mechanical Systems, (Orlando,FL,USA) est de plus de 50 dB.

En effet, pour la silice : $E_{silice}$ =72.10$^9$ Pa et $\vartheta_{silice}$ = 0,23 et pour le PDMS 1 :15 :$E_{PDMS1:15}$ =3.6×10$^5$ Pa et $\vartheta_{PPMS1:15}$ =-0,28.
Ce qui donne :

$$\frac{\varepsilon_{z,amplifié}}{\varepsilon_{z,simple}} = 5,78 \times 10^5$$

La taille du cylindre dépend de l'application visée. La limite inférieure de son diamètre dépend, en partie, des pertes et de la biréfringence de la fibre. Il faut également noter que, si l'enroulement de la fibre biréfringente est effectué de telle sorte que l'un de ses deux axes propres subisse préférentiellement la contrainte, par exemple, si cet axe est perpendiculaire à l'axe du cylindre tout le long de l'enroulement, l'écart en fréquence $\delta\nu_1(\varepsilon)$-$\delta\nu_2(\varepsilon)$ peut être augmenté.

Les capteurs précédents peuvent être facilement multiplexer comme illustré en figure 6. Pour multiplexer plusieurs capteurs i selon l'invention, il est nécessaire d'ajouter au dispositif de la figure 1, un laser sonde 20 se propageant dans le même sens que la pompe. Ce laser sonde est soit une source large autour de 1,5µm, soit une source accordable autour de 1,5µm, adaptée à la longueur d'onde de Bragg des miroirs de fond de cavité. Les capteurs peuvent être réalisés selon les modes décrits précédemment. Dans ce cas, chaque capteur i comporte une fibre 10$_i$ qui émet deux ondes 1$_i$'et 2$_i$' ayant les fréquences $\nu_{i1}$ et $\nu_{i2}$.

Le multiplexage permettant de discriminer les signaux provenant des différents capteurs peut être réalisé par différentes techniques. On citera le multiplexage temporel ou le multiplexage spectral.

**Revendications**

1. Capteur à fibre optique de mesure d'une grandeur physique comprenant au moins :

   • une fibre optique (10) de mesure comportant au moins un milieu amplificateur (11) et un réseau de Bragg (12) ;
   • des moyens de pompage optique (20) du dit milieu amplificateur assurant l'inversion de population dudit milieu ;
   • la fibre optique (10) est une fibre à maintien de polarisation biréfringente, comportant deux axes propres d'indice de réfraction respectifs $n_e$ et $n_o$, **caractérisé en ce que**:
   • le capteur comporte des moyens d'émission d'une onde optique dite sonde, ladite onde créant par interférence avec elle-même après réflexion sur le réseau de Bragg un réseau de gain dynamique (13) donnant naissance à deux ondes optiques (1', 2') de fréquence optique différente, les deux fréquences optiques dépendant de la grandeur physique ;
   • le capteur comporte des moyens d'analyse (40) de la différence de fréquence entre les deux ondes optiques.

2. Capteur à fibre optique selon la revendication 1, **caractérisé en ce que** le capteur est un capteur de contraintes, la grandeur physique à mesurer étant une contrainte mécanique appliquée sur la fibre.

3. Capteur à fibre optique selon la revendication 2, **caractérisé en ce que** le capteur est un hydrophone.

4. Capteur à fibre optique selon l'une des revendications 2 ou 3 , **caractérisé en ce que** le capteur comporte une structure sensiblement cylindrique (50) sur laquelle est enroulée la fibre optique de mesure, ledit cylindre étant réalisé dans un matériau ayant un module d'Young le plus faible possible de façon à amplifier la contrainte exercée sur la fibre.

5. Capteur à fibre optique selon la revendication 4, **caractérisé en ce que** le matériau du cylindre est le polymethylsiloxane.

6. Réseau de capteurs à fibre optique selon l'une des revendications précédentes, **caractérisé en ce que** tous les capteurs sont disposés en série sur une même fibre optique et que le réseau comporte un multiplexeur en longueurs d'onde disposé entre ladite fibre et les moyens d'analyse.

**Patentansprüche**

1. Glasfasersensor zum Messen einer physikalischen Größe, der wenigstens Folgendes umfasst:

   • eine Messglasfaser (10), die wenigstens ein Verstärkungsmedium (11) und ein Bragg-Gitter (12) umfasst;
   • optische Mittel (20) zum Pumpen des Verstärkermediums, um die Populationsumkehr des Mediums zu gewährleisten;
   • wobei die Glasfaser (10) eine Faser zum Halten einer doppelbrechenden Polarisation ist, umfassend zwei eigene Brechungsindexachsen von $n_e$ bzw. $n_o$, **dadurch gekennzeichnet, dass**:
   • der Sensor Mittel zum Senden einer Sonde genannten optischen Welle umfasst, wobei die Welle durch Interferenz mit sich selbst nach der Reflexion an dem Bragg-Gitter ein dynamisches Verstärkungsnetz (13) erzeugt, das zur Entstehung von zwei optischen Wellen (1', 2') von unterschiedlicher optischer Frequenz führt, wobei die beiden optischen Frequenzen von der physikalischen Größe abhängen;
   • der Sensor Mittel (40) zum Analysieren der Frequenzdifferenz zwischen den beiden optischen Wellen umfasst.

2. Glasfasersensor nach Anspruch 1, **dadurch gekennzeichnet, dass** der Sensor ein Dehnungssensor ist, wobei die zu messende physikalische Größe eine auf die Faser aufgebrachte mechanische Dehnung ist.

3. Glasfasersensor nach Anspruch 2, **dadurch gekennzeichnet, dass** der Sensor ein Hydrophon ist.

4. Glasfasersensor nach Anspruch 2 oder 3, **dadurch gekennzeichnet, dass** der Sensor eine im Wesentlichen zylindrische (50) Struktur umfasst, auf der die Messglasfaser aufgerollt ist, wobei der Zylinder aus einem Material mit einem Elastizitätsmodul realisiert ist, das so gering wie möglich ist, um die auf die Faser aufgebrachte Dehnung zu verstärken.

**5.** Glasfasersensor nach Anspruch 4, **dadurch gekennzeichnet, dass** das Material des Zylinders Polymethylsiloxan ist.

**6.** Anordnung von Glasfasersensoren nach einem der vorherigen Ansprüche, **dadurch gekennzeichnet, dass** alle Sensoren in Serie auf einer selben Glasfaser angeordnet sind und dass die Anordnung einen Wellenlängenmultiplexer umfasst, der zwischen der Faser und den Analysemitteln angeordnet ist.

**Claims**

**1.** A fiber-optic sensor for measuring a physical quantity, comprising at least:

> • a measurement optical fiber (10) having at least one amplifying medium (11) and a Bragg grating (12);
> • optical pumping means (20) for pumping said amplifying medium to ensure population inversion of said medium;
> • the optical fiber (10) is a birefringent polarization-maintaining fiber, having two eigenaxes having respective refractive indices $n_e$ and $n_o$; **characterized in that**:
> • the sensor includes means for emitting an optical wave, called a probe wave, said wave creating, by interference with itself after reflection on the Bragg grating, a dynamic gain grating (13) generating two optical waves (1', 2') having different optical frequencies, the two optical frequencies depending on the physical quantity; and
> • the sensor includes means (40) for analyzing the frequency difference between the two optical waves.

**2.** The fiber-optic sensor as claimed in claim 1, **characterized in that** it is a strain sensor, the physical quantity to be measured being a mechanical strain applied to the fiber.

**3.** The fiber-optic sensor as claimed in claim 2, **characterized in that** it is a hydrophone.

**4.** The fiber-optic sensor as claimed in either of claims 2 and 3, **characterized in that** it has a structure substantially in the form of a cylinder (50) around which the measurement optical fiber is wound, said cylinder being made of a material having the lowest possible Young's modulus so as to amplify the strain exerted on the fiber.

**5.** The fiber-optic sensor as claimed in claim 4, **characterized in that** the material of the cylinder is polydimethylsiloxane.

**6.** An array of fiber-optic sensors as claimed in one of the preceding claims, **characterized in that** all the sensors are placed in series on one and the same optical fiber and **in that** the array includes a wavelength multiplexer placed between said fiber and the analysis means.

# FIG. 1

FIG. 2

FIG. 3

$$\Delta\nu_{initiale}(\epsilon) = \nu_1 - \nu_2$$

$$\Delta\nu_{finale}(\epsilon) = \nu_1 - \nu_2 + \delta\nu(\epsilon)$$

FIG.4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8844927 B
- US 5844927 A
- US 6885784 B
- US 6630658 B

- WO 0248654 A
- FR 0701454
- US 6442304 B
- US 6668105 B

**Littérature non-brevet citée dans la description**

- **C. MENADIER ; C.KISSENGER ; H. ADKINS.** The photonic sensor. *Instrum. Control Syst.,* 1967, vol. 40, 114
- **B. CULSHAW.** Optical fiber sensor technologies : opportunities and -perhaps-pitfalls. *J. Ligth. Tech.,* 2004, vol. 22 (1), 39
- **V. VALI ; R. W. SHORTHILL.** Fiber ring interferometer. *Appl. Opt.,* 1976, vol. 15 (5), 1099
- **P. NASH.** Review of interferometric optical fiber hydrophone technology. *IEE Proc. Radar Sonar Navig.,* 1996, vol. 143 (3
- Monitoring of large structures using distributed Brillouin fiber sensing. **L. THÉVENAZ et al.** proceedings of the 13th international conf on optical fiber sensors (OFS-13). SPIE, 1999, vol. 3746, 345
- **S.W. JAMES et al.** Simultaneous independent temperature and strain measurement using in-fiber Bragg grating sensors. *Elect. Lett.,* 1996, vol. 32 (12), 1133
- **D. KERSEY et al.** Fiber Grating Sensors. *J. Light. Techn.,* 1997, vol. 15 (8
- DFB fibre-laser sensor developments. **J. HILL et al.** OFS-17 Proc. SPIE, vol. 5855, 904
- *Optical Fiber Distributed FeedBack Laser,* 1998
- **C. SUN et al.** Serially multiplexed dual-point fiber-optic acoustic emission sensor. *J. Light. Techn.,* 2004, vol. 22 (2
- **S. ABAD et al.** Interrogation of wavelength multiplexed fiber Bragg gratings using spectral filtering and amplitude-to-phase optical conversion. *J. of Ligth. Techn.,* 2003, vol. 21 (1

- **KUMAR et al.** Studies on a few-mode fiber-optic strain sensor based on LP01-LP02 mode interference. *J. Ligth. Techn.,* 2001, vol. 19 (3
- **P.E. BAGNOLI et al.** Development of an erbium-doped fibre laser as a deep-sea hydrophone. *J. of Optics A : Pure Appl. Opt.,* 2006, 8
- **D.J. HILL et al.** A fiber laser hydrophone array. SPIE Conf on Fiber Optic Sensor Technology and Applications, 1999, vol. 3860, 55
- **S. FOSTER et al.** Ultra thin fiber laser hydrophone research trough government-industry collaboration. *OFS,* 2005
- **A. BRIGNON ; G. FEUGNET ; J.-P. HUIGNARD ; J.-P. POCHOLLE.** Efficient degenerate four-wave mixing in a diode-pumped microchip Nd:YVO4 amplifier. *Opt. Lett.,* 1995, vol. 20 (6), 548-550
- **P. YEH.** Two-wave mixing in nonlinear media. *IEEE. J. Quantum Electr.,* 1989, vol. 25 (3), 484-518
- **S.T. FISKEN.** Transient Bragg Reflection gratings in erbium-doped fiber amplifiers. *Opt. Lett.,* 1992, vol. 17 (24), 1776-1778
- **B. FISCHER ; J.L. ZYSKIND ; J.W. SULHOFF ; D.J. DIGIOVANNI.** Nonlinear wave mixing and induced gratings in erbium-doped fiber amplifiers. *Opt. Lett.,* 1993, vol. 18 (24), 2108-2110
- **D. ARMANI ; C. LIU ; N. ALURU.** Re-configurable fluid circuits by PDMS elastomer micromachining. *This paper appears in twelfth IEEE international conférence on Micro Electro Mechanical Systems, (Orlando,FL,USA)*